# EUROPÄISCHE PATENTANMELDUNG

(11) **EP 2 535 756 A1**
(43) Veröffentlichungstag der Anmeldung: **19.12.2012**
(21) Anmeldenummer: 12169066.3
(22) Anmeldetag: 23.05.2012
(51) Int. Cl.: G02B 21/16, G02B 21/36, G01N 21/64

(54) **Mikroskop und Verfahren zur bildgebenden Fluoreszenzmikroskopie**

(30) Priorität: 17.06.2011 DE 102011105181
(71) Anmelder: Leica Microsystems CMS GmbH, 35578 Wetzlar (DE)
(72) Erfinder: Seyfried, Volker, 69226 Nußloch (DE)
(74) Vertreter: Ullrich & Naumann

(57) **Zusammenfassung**

Ein Mikroskop zur bildgebenden Fluoreszenzmikroskopie, insbesondere zur Widefield-Fluoreszenzmikroskopie, mit einer gepulsten Lichtquelle (1) und einem bildgebenden Detektor (11), ist dadurch gekennzeichnet, dass Mittel zum Gaten vorgesehen sind und dass durch das Gaten eine Synchronisation von Lichtquelle (1) und Detektor (11) zum Zwecke einer Reflexions-/Streulichtunterdrückung derart erfolgt, dass geeignete Fluoreszenzanteile für die Auswertung verwertet und ungeeignete Anteile verworfen werden. Des Weiteren dient ein Verfahren zur bildgebenden Fluoreszenzmikroskopie unter Nutzung des erfindungsgemäßen Mikroskops.

## Beschreibung

Die Erfindung betrifft ein Mikroskop zur bildgebenden Fluoreszenzmikroskopie, insbesondere zur Widefield-Fluoreszenzmikroskopie, mit einer gepulsten Lichtquelle und einem bildgebenden Detektor. Des Weiteren betrifft die Erfindung ein entsprechendes Verfahren, insbesondere zur Anwendung des erfindungsgemäßen Mikroskops.

Die Erfindung bezieht sich ganz allgemein auf die Fluoreszenzmikroskopie, dabei insbesondere auf die Widefield-Fluoreszenzmikroskopie.

Die Widefield-Fluoreszenzmikroskopie hat eine große Bedeutung in der biologischen und medizinischen Forschung. Während bei der klassischen Fluoreszenzmikroskopie die Probe mehr oder weniger punktuell beleuchtet wird, wird bei der sog. Weitfeld-Mikroskopie (englisch = widefield-microscopy) die Probe großflächig beleuchtet und mittels Objektiv abgebildet, so dass die PSF (Point Spread Function) des Gesamtsystems nur durch die (Detektions-)PSF des Objektivs bestimmt ist. Im Gegensatz dazu wird das einfallende Licht bei einem konfokalen Mikroskop auf die Probe fokussiert, so dass die Gesamt-PSF das Produkt der Beleuchtungs-PSF und der Detektions-PSF ist.

Grundsätzlich wird bei Widefield-Fluoreszenzmikroskopen deutlich mehr Anregungslicht von der Probe in den Detektorstrahlengang des Mikroskops zurückgestreut, als dies bei Konfokalmikroskopen mit ihrer räumlichen Filterung durch das Detektionspinhole möglich ist. Um dennoch unter zufriedenstellenden Bedingungen Bilder aufnehmen zu können, muss das Streu-/Reflexionslicht ausreichend unterdrückt werden. Hierzu werden in einem Widefield-Fluoreszenzmikroskop typischerweise Sperrfilter eingesetzt, die die entsprechenden Anregungswellenlängen unterdrücken. Üblicherweise geschieht dies mit Hilfe von Filterwürfeln, die neben dem Sperrfilter (Emissionsfilter) zusätzlich noch einen Anregungsfilter zur spektralen Aufreinigung des Anregungslichts und einen Dichroiten als Hauptstrahlteiler umfassen, wobei der Hauptstrahlteiler zugleich den Anregungs- und Emissionsfilter unterstützt.

Hierbei ist jedoch nachteilig, dass aufgrund der unveränderlichen Filtercharakteristiken kein spektrales Durchstimmen des Anregungslichts möglich ist. Bei Mehrwellenlängen-Anregung müssen außerdem ganz spezielle Filter eingesetzt werden, die an den geeigneten spektralen Stellen transmittieren bzw. reflektieren, was die Flexibilität weiter einschränkt und bei einer Vielzahl von möglichen spektralen Anregungs- und Detektionsbereichen eine so hohe Anzahl von Kombinationen erfordert, dass dies durch die in der Praxis üblichen Filterräder nicht realisierbar ist. Zudem bedingt die spektrale Breite der jeweiligen Filter, dass der Detektionsbereich einen definierten spektralen Abstand vom Anregungswellenlängenbereich haben muss, wodurch im Zwischenbereich Detektionslicht verloren geht, das man für eine erhöhte Sensitivität des Mikroskops gerne detektieren würde.

Zu Konfokalmikroskopen sei beispielhaft auf die DE 199 06 757 A1 verwiesen. Dort liegt das Detektionslicht - üblicherweise - zumindest teilweise als gerichteter Strahl vor, der durch ein Pinhole läuft. Entsprechend sind akustooptische Komponenten einsetzbar. In der Widefield-Mikroskopie liegt dagegen ein echtes Bild in Feldoptik vor, was bedeutet, dass Licht in einer Vielzahl möglicher räumlicher Winkel gleichzeitigt auftritt, was wiederum den Einsatz entsprechender akustooptischer Komponenten nicht sinnvoll erscheinen lässt, ja geradezu unmöglich macht. Dies ist darauf zurückzuführen, dass die akustooptischen Komponenten eine enorm große optische Öffnung benötigten und daher äußerst aufwändig und teuer wären.

Aus der US 5,252,834 ist für sich gesehen das Gating in einem Mikroskop bekannt, jedoch nicht zur Bildgebung und schon gar nicht bei der Reflexions-/Streulichtunterdrückung in der Bildgebung. Vielmehr geht es dort um die Aufnahme von punktuellen Spektren zur Probencharakterisierung im Hinblick auf deren chemische Zusammensetzung (Mikrospektrophotometrie). Bildgebende Detektoren sind dort nicht vorgesehen.

Der vorliegenden Erfindung liegt die Aufgabe zugrunde, bei bildgebenden Fluoreszenzmikroskopen, die sich zur Widefield-Fluoreszenzmikroskopie eignen, mit einfachen Mitteln eine Reflexions-/Streulichtunterdrückung zu realisieren, um nämlich unter zufriedenstellenden Bedingungen reproduzierbare Bilder aufnehmen zu können. Die dazu erforderlichen Maßnahmen sollen mit einfachen Mitteln kostengünstig realisierbar sein.

Die voranstehende Aufgabe ist in Bezug auf das erfindungsgemäße Mikroskop durch die Merkmale des Patentanspruchs 1 gelöst. In Bezug auf das erfindungsgemäße Verfahren ist die voranstehende Aufgabe durch die Merkmale des nebengeordneten Patentanspruchs 18 gelöst, und zwar unter Nutzung eines erfindungsgemäßen Mikroskops.

In Bezug auf das erfindungsgemäße Mikroskop ist die zugrundeliegende Aufgabe dadurch gelöst, dass Mittel zum Gaten vorgesehen sind und dass durch das Gaten eine Synchronisation von Lichtquelle und Detektor zum Zwecke einer Reflexions-/Streulichtunterdrückung derart erfolgt, dass geeignete Fluoreszenzanteile für die Auswertung verwertet und ungeeignete Anteile verworfen werden. Das erfindungsgemäße Verfahren ist entsprechend ausgelegt.

Der erfindungsgemäße Ansatz schlägt das Gating eines bildgebenden Detektors in der Mikroskopie in Kombination mit gepulsten Lichtquellen vor. Die derzeit in der Mikroskopie hauptsächlich eingesetzten Kameras erlauben allerdings kein Gating, schon gar nicht für alle Pixel gleichzeitig, da üblicherweise ein sequentielles Auslesen über gemeinsame Ausleseregister erfolgt. Auch die üblichen CMOS-Chips mit Einzelphotonen-Empfindlichkeit erlauben dies nicht, da bei ihnen zwar ein paralleles Auslesen möglich ist, jedoch der Auslesevorgang für geeignetes Gating im Sub-100ns-Bereich viel zu langsam ist.

Auf Grundlage der Erfindung werden vorzugsweise mit Arrays aus im Geiger-Mode betriebenen Avalanache-Photodioden (APD-Arrays; wobei diese Art der APDs gelegentlich auch "Silicon Photomultiplier" genannt werden) bildgebende Einheiten angegeben, die sich gaten lassen und mit deren Hilfe die Realisierung der erfindungsgemäßen Reflexions-/Streulichtunterdrückung möglich ist. Grundsätzlich sind auch andere Möglichkeiten für "gatebare Kameras" denkbar.

Die Erfindung geht von einem Fluoreszenzmikroskop aus, welches mit einer gepulsten Lichtquelle und einem bildgebenden Detektor arbeitet. In Bezug auf die gepulste Lichtquelle ist es von Vorteil, wenn diese eine Pulsdauer im Bereich der Lebensdauer der Fluorophore oder besser noch darunter besitzt, um die Abklingzeit der Fluoreszenz zu berücksichtigen. Unter Zugrundelegung üblicher Fluoreszenzfarbstoffe ist es von Vorteil, eine Pulsdauer im Bereich unter 5 ns, bevorzugt unter 1 ns, ganz bevorzugt unter 200 ps, zu realisieren. Bei der Lichtquelle kann es sich um einen Laser, eine LED, eine Blitzlampen-LED oder um ein lasergepumptes Verstärkungsmedium, etc. handeln. Es ist von ganz besonderem Vorteil, wenn sich die Lichtquelle triggern lässt, wobei dies zur Realisierung der erfindungsgemäßen Lehre nicht zwingend erforderlich ist.

In besonders vorteilhafter Weise lassen sich gepulste Weißlichtlaser, gepulste LEDs, gepulste OPOs und sonstige gepulste Laser verwenden.

Zur Detektion wird ein gatebarer bildgebender Detektor eingesetzt, sozusagen eine "gatebare Kamera". Hierbei handelt es sich entweder um eine Kamera, die vorgeschaltet einen irgendwie gearteten triggerbaren/gatebaren schnellen optischen Shutter aufweist oder um einen bildgebenden Detektor, der gatebar aktiviert/deaktiviert werden kann. Auch ist die Nutzung eines bildgebenden Detektors möglich, der nach Erzeugung des Detektorsignals die entsprechende Information zur Verfügung stellt, die besagt, ob der jeweilige Signalanteil verwertet oder verworfen werden soll.

Ein gatebarer optischer Shutter könnte bspw. ein schnell schaltbarer optischer Bildverstärker sein, der im ausgeschalteten Zustand das Licht nicht verstärkt, während er dies im einschalteten Zustand tut. Es könnte auch ein sättigbarer optischer Absorber sein, der durch kurze Lichtpulse gesättigt und dadurch bei Anliegen des Gates durchsichtig wird.

Ein gatebarer Detektor könnte auf Basis von Arrays aus im Geiger-Mode betriebenen Avalanche-Photodioden (APD) realisiert sein. Jedes einzelne Bildpixel des bildgebenden Detektors besteht hierbei aus einer einzelnen, im Geiger-Mode betriebenen APD oder aus mehreren davon (= Subarray). Durch Anlegen einer geeigneten Gate-Spannung wird der Geiger-Mode der einzelnen APDs freigeschaltet, wodurch erreicht wird, dass auftreffende Photonen den Durchbruch der APDs auslösen können und ein entsprechendes elektronisches Signal erzeugen. Solange das Gate aus ist, kann dies jedoch nicht geschehen, so dass in dieser Zeit der Detektor nicht aktiv ist.

Auch andere Realisierungsmöglichkeiten eines Gates sind denkbar, bspw. Dahingehend, dass der Ausgang des Detektors während der Aus-Zeit des Gates kurzgeschlossen oder gegenüber der Signal-Abführleitung abgeklemmt ist. Ähnliche von außen ansteuerbare Gates lassen sich auch bei anderen Kamera-Typen wie CMOS-oder CCD-Chips realisieren.

Grundsätzlich ist es nicht unbedingt erforderlich, dass die Entstehung eines Signals im Aus-Zustand des Gates unterdrückt wird. Es reicht aus, die entsprechende zeitliche Information zu "konservieren". Im Extremfall genügt es, jedem einzelnen Photon eine Zeitmarke aufzudrücken, d.h. bei jedem einzelnen Photon die Ankunftszeit zu speichern, um so in einer nachgelagerten Datenverarbeitungseinheit (FPGA, DSP, etc.) zu entscheiden, ob das Photon verwendet oder verworfen werden soll. Dies muss nicht unbedingt für jedes einzelne Photon erfolgen. Im Prinzip genügt es, für jedes Bildpixel den zeitlichen Signalverlauf oder Teile davon aufzuzeichnen und nachträglich auszuwerten.

Die Übergänge zwischen den zuvor erörterten Techniken sind fließend, insbesondere aufgrund der heutzutage immer stärker integrierten Elektronik. Wichtig ist nur, dass sich die bildgebende Einheit gaten lässt, wobei bevorzugt ein einheitliches (gleichzeitiges) Gate für alle Bildpixel vorliegt, allerdings in Spezialfällen auch unterschiedliche zeitliche Gatepositionen denkbar sind.

Der entscheidende erfinderische Schritt ist darin zu sehen, dass die gatebare bildgebende Einheit so mit der gepulsten Lichtquelle synchronisiert wird, dass reproduzierbar die geeigneten Fluoreszenzanteile für die Auswertung verwertet und die ungeeigneten Anteile verworfen werden. Vorzugsweise werden die Lichtanteile, die dem interessierenden Fluoreszenzlicht zuzuordnen sind, durch das geeignete Gate für die Bildgebung verwendet, und zwar unabhängig davon, wie es realisiert ist. Die Anteile, die dem Reflexions- oder Streulicht zuzuordnen sind, werden verworfen. Es kann in bestimmten Fällen sinnvoll sein, dass das Fluoreszenzlicht eines frei einstellbaren Zeitbereichs nach der Beleuchtung verwendet wird, während anderes Licht verworfen oder zumindest einem anderen Detektionskanal zugeordnet bzw. zugeführt wird. Dies kann insbesondere bei Proben relevant sein, bei denen die Fluoreszenzlebensdauer Rückschluss auf lokale Gegebenheiten im Inneren der Probe zulässt.

Zur Umsetzung des erfindungsgemäßen Gedankens muss nur der bildgebende Detektor, d.h. die "Kamera", mit seinem Gate auf die Lichtquelle geeignet synchronisierbar sein. Das kann dadurch erfolgen, dass eine zentrale Triggereinheit vorgesehen ist, die den Master darstellt, auf den die Lichtquelle und die Kamera getriggert werden. Umgekehrt kann auch die Lichtquelle den Mastertrigger erzeugen, bspw. bei passiv modemgekoppelten Lasern, auf den die Kamera getriggert wird, oder kann die Kamera, aus einer intrinsischen oder von außen angesteuerten Clock, den Trigger erzeugen, auf den dann die Lichtquelle synchronisiert wird.

Hat man die entsprechende Anordnung realisiert, dann lässt sich eine Reflexions-/Streulichtunterdrückung im Mikroskop leicht umsetzen. Dies allein hilft bereits bei herkömmlichen Mikroskopen, die Bildgebung bei schwierigen Proben zu realisieren.

Man kann diesen Vorteil insoweit ausnutzen, als man auf die üblichen Fluoreszenzwürfel im Mikroskop verzichtet und dadurch eine deutlich höhere spektrale Freiheit als bisher zulässt. Wenn man den Fluoreszenzwürfel durch einen Neutralteiler ersetzt (bspw. 50:50 oder 80:20, d.h. 20% Lichteinkopplung in Reflexion und 80% Fluoreszenzausbeute in Transmission oder andere Teilungsverhältnisse), kann man beliebige Wellenlängen auch gleichzeitig zur Fluoreszenzanregung einsetzen und im Extremfall sogar bei den gleichen Wellenlängen detektieren, ohne Probleme mit Reflexions- oder Streulicht zu haben.

Um letzteres zu erreichen, ist allerdings eine besonders gute Unterdrückung notwendig, die man z.B. durch Kombination verschiedener Gating-Methoden erreicht. Zusätzlich ist auch weiterhin der Einsatz von Sperr-, Notch-, Bandkanten-, Verlaufs- oder sonstigen Filtern denkbar. Auch der Einsatz eines Polarisationsfilters anstelle des oben beschriebenen Neutralfilters bei gleichzeitiger Verwendung geeignet polarisierten Anregungslichts trägt zur weiteren Reflexions-/Streulichtunterdrückung bei, wenngleich dies geringere Detektionsempfindlichkeiten zur Folge hat. Es sei an dieser Stelle darauf hingeweisen, dass der Begriff "Reflexions-/Streulichtunterdrückung" nicht unbedingt nur Reflexion/Streuung von der Probe betrifft - es kann sich auch um Reflexion/Streuung an Bauteilen im Inneren des Mikroskops handeln, die zu unterdrücken ist.

Besonders vorteilhaft ist die Verwendung von Neutralfiltern, bzw. spektral relativ flach verlaufende Filter, oder durchstimmbaren Filtern in Kombination mit durchstimmbaren Lichtquellen oder Lichtquellen mit spektral flachem Verlauf (z.B. Weißlichtquellen), aus deren Spektrum das Beleuchtungslicht ausgeschnitten wird. Durch diese Kombination ist ein komplett spektral durchstimmbares Widefield-Mikroskop mit hoher Empfindlichkeit realisierbar. Dadurch lässt sich für jede Probe die individuell optimierte spektrale Beleuchtungseinstellung finden, und es lassen sich sogar Anregungswellenlängenscans durchführen. Dies lässt sich auch mit spektraler Detektion im Mikroskop kombinieren. Im Extremfall können sogar entsprechend kombinierte Anregungs-/Emissionsspektren aufgenommen werden.

Die erfindungsgemäße Technik lässt sich in allen Fluoreszenzmikroskopen mit bildgebenden Einheiten einsetzen. Hierzu gehören auch Spinning-Disk-Mikroskope, Lokalisationsmikroskope, TIRF-Mikroskope, Mikroskope mit strukturierter Beleuchtung, SPIM-Mikroskope, etc.. Die erfindungsgemäße Technik ist für die Fluoreszenzmikroskopie sowohl in Auflicht- als auch in Durchlichtbeleuchtung anwendbar.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht den grundsätzlichen Aufbau eines herkömmlichen, aus der Praxis bekannten Fluoreszenzmikroskops mit Filterwürfel,
- Fig. 2: ein erstes Ausführungsbeispiel eines erfindungsgemäßen Mikroskops, wobei dort die Beleuchtungseinheit triggerbare LEDs umfasst,
- Fig. 3: ein weiteres Ausführungsbeispiel eines erfindungsgemäßen Mikroskops, wobei dort ein Neutral- oder Polteiler verwendet wird und
- Fig. 4: ein weiteres Ausführungsbeispiel eines erfindungsgemäßen Mikroskops, wobei dort ein schneller optischer Shutter verwendet wird.

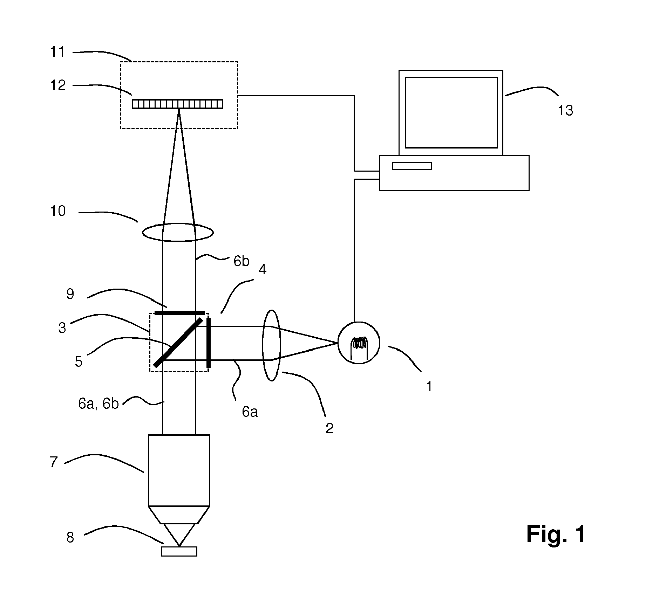

Fig. 1 zeigt in schematischer Ansicht den grundsätzlichen Aufbau eines herkömmlichen Fluoreszenzmikroskops, wobei dort das Anregungslicht mittels eines Filterwürfels durchgestimmt wird.

Im Detail umfasst die in Fig. 1 gezeigte Anordnung eine als Lichtquelle zu verstehende Beleuchtungseinheit 1, einen der Beleuchtungseinheit 1 nachgeschalteten Kondensor 2 und einen Filterwürfel 3 mit einem Anregungsfilter 4 sowie einem dichroitischen Strahlteiler 5. Das Anregungslicht 6a gelangt über den Anregungsfilter 4 durch ein Objektiv 7 zur Probe 8.

Das von der Probe 8 kommende Fluoreszenzlicht/Reflexionslicht 6b gelangt durch das Objektiv 7 über den Filterwürfel 3, einen integrierten Emissionsfilter 9 durch eine Tubuslinse 10 gebündelt zu einem Detektor 11, der als Kamera mit integriertem Kamera-Chip 12 ausgeführt sein kann. Die so erhaltenen Signale werden einem Computer 13 zugeführt, der sowohl eine Bildverarbeitungseinheit als auch eine Steuereinheit, insbesondere zur Ansteuerung der Beleuchtungseinheit 1, umfasst.

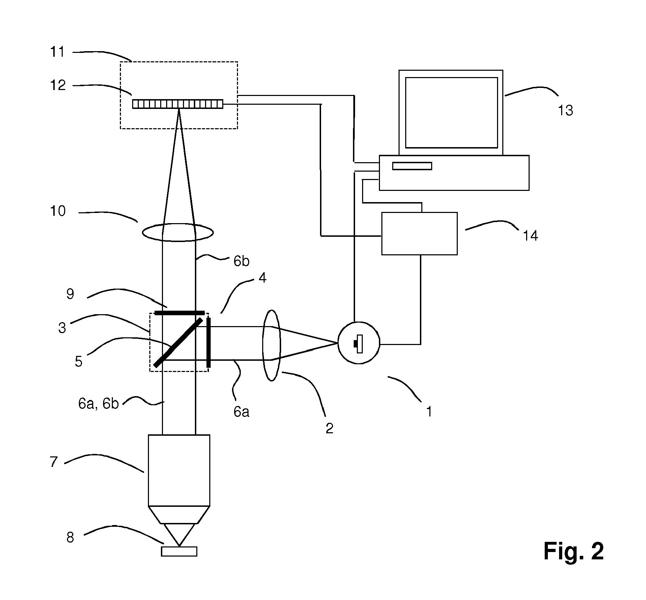

Fig. 2 zeigt ein erstes Ausführungsbeispiel einer erfindungsgemäßen Anordnung, wonach weiterhin der aus dem Stand der Technik bekannte Filterwürfel 3 Verwendung findet. Als gepulste Beleuchtungseinheit 1 ist eine triggerbare LED eingesetzt. Zum erfindungsgemäßen Gating ist ein Master vorgesehen, im Konkreten eine vom Computer 13 ansteuerbare bzw. über den Computer 13 programmierbare Trigger-/Synchronisierungseinheit 14. Hinsichtlich weiterer baulicher Merkmale, wie sie dem Stand der Technik nach Fig. 1 entsprechen, sei zur Vermeidung von Wiederholungen auf die Beschreibung zu Fig. 1 verwiesen.

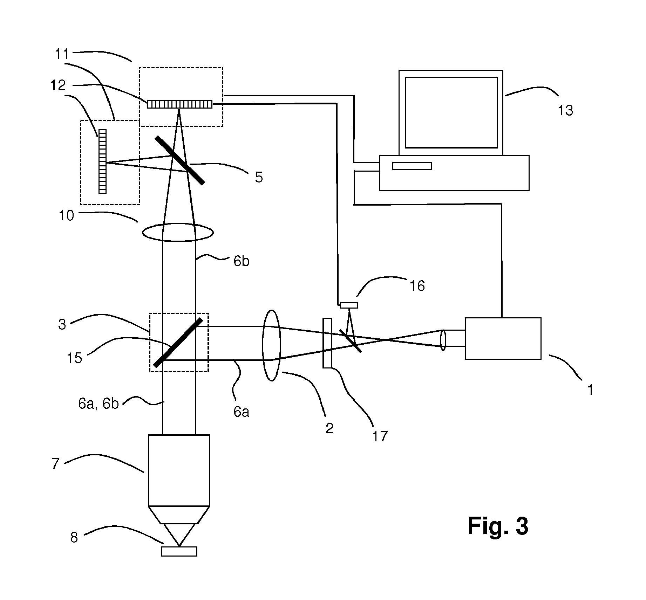

Fig. 3 zeigt im Rahmen eines weiteren Ausführungsbeispiels einer erfindungsgemäßen Anordnung den Einsatz eines Neutral- oder Polteilers 15 als Bestandteil oder anstelle eines Filterwürfels 3. Die Beleuchtungseinheit 1 ist als Laser ausgeführt, der für das erfindungsgemäße Gating den Master definiert. Sein Trigger wird über einen optischen Referenzsensor 16 abgegriffen. Der Trigger wird direkt der gatebaren Kamera 11 zugeführt, die eine integrale Auswerteeinheit umfassen kann. Dabei kann eine externe Triggereinheit ggf. entfallen.

Lediglich beispielhaft sind bei dem Ausführungsbeispiel nach Fig. 3 zwei spektrale Detektoreinheiten in Form von Kameras 11 vorgesehen. Ein Verlaufsfilter 17 dient zur Extraktion spezieller Spektralanteile für die Beleuchtung aus der Beleuchtungseinheit 1. Insoweit sei angemerkt, dass statt des Verlaufsfilters 17 auch andere Elemente mit ähnlichen Funktionen verwendbar sind, z.B. AOTFs.

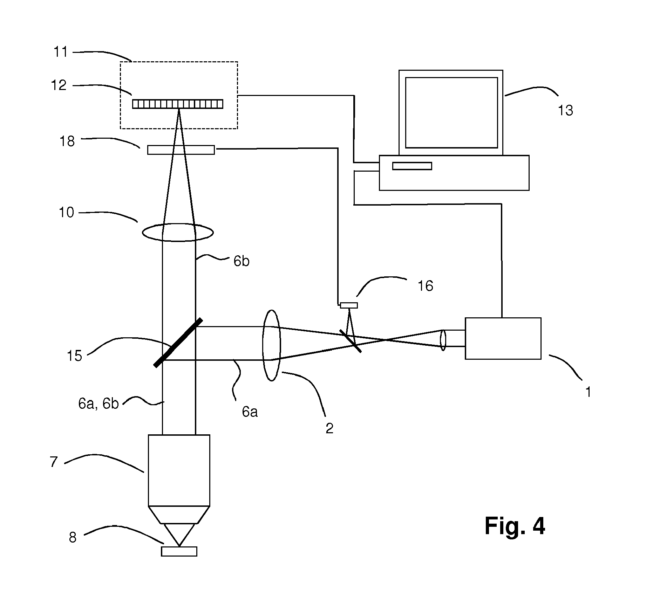

Fig. 4 zeigt ein weiteres Ausführungsbeispiel einer erfindungsgemäßen Anordnung, wobei es dort um die Realisierung einer solchen Anordnung mit einem schnellen optischen Shutter 18 geht. Außerdem ist in Fig. 4 angedacht, dass sich bei einer besonders bevorzugten Realisierung der erfindungsgemäßen Idee der Neutralteiler 15 fest im Mikroskop einbauen lässt, wodurch ein Wechseln von Filterwürfeln nicht bzw. nicht mehr notwendig ist.

Hinsichtlich weiterer vorteilhafter Ausgestaltungen des erfindungsgemäßen Mikroskops sei zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Beleuchtungseinheit, Lichtquelle
- 2: Kondensor
- 3: Filterwürfel
- 4: Anregungsfilter
- 5: dichroitischer Strahlteiler, Dichroit
- 6a: Anregungslicht
- 6b: Fluoreszenzlicht/Reflexionslicht
- 7: Objektiv
- 8: Probe
- 9: Emissionsfilter
- 10: Tubuslinse
- 11: Detektor, Kamera
- 12: Kamera-Chip
- 13: Computer, Datenverarbeitungseinheit
- 14: Trigger-/Synchronisationseinheit
- 15: Neutralteiler, Polteiler
- 16: optischer Referenzsensor
- 17: Verlaufsfilter
- 18: optischer Shutter

## Patentansprüche

1. Mikroskop zur bildgebenden Fluoreszenzmikroskopie, insbesondere zur Widefield-Fluoreszenzmikroskopie, mit einer gepulsten Lichtquelle (1) und einem bildgebenden Detektor (11),
**dadurch gekennzeichnet, dass** Mittel zum Gaten vorgesehen sind und dass durch das Gaten eine Synchronisation von Lichtquelle (1) und Detektor (11) zum Zwecke einer Reflexions-/Streulichtunterdrückung derart erfolgt, dass geeignete Fluoreszenzanteile für die Auswertung verwertet und ungeeignete Anteile verworfen werden.

2. Mikroskop nach Anspruch 1, **dadurch gekennzeichnet, dass** Lichtanteile, die dem interessierenden Fluoreszenzlicht zugeordnet sind durch das Gaten dem Detektor (11) zuführbar sind und dass diejenigen Lichtanteile, die dem Reflexions-/Streulicht zugeordnet sind, zur Bildgebung unberücksichtigt bleiben.

3. Mikroskop nach Anspruch 1 oder 2, **dadurch gekennzeichnet, dass** das Fluoreszenzlicht eines definierbaren Zeitfensters nach der Beleuchtung verwendbar ist und dass das außerhalb des Zeitfensters liegende Fluoreszenzlicht zur Bildgebung unberücksichtigt bleibt und/oder einem anderen Detektionskanal zuführbar ist.

4. Mikroskop nach einem der Ansprüche 1 bis 3, **dadurch gekennzeichnet, dass** für alle Bildpixel ein einheitliches und/oder gleichzeitiges Gate vorliegt.

5. Mikroskop nach einem der Ansprüche 1 bis 4, **dadurch gekennzeichnet, dass** für unterschiedliche Bildpixel unterschiedliche zeitliche Gates bzw. Gatepositionen realisierbar sind.

6. Mikroskop nach einem der Ansprüche 1 bis 5, **dadurch gekennzeichnet, dass** die Mittel zum Gaten eine vorzugsweise zentrale Triggereinheit (14) umfassen, die einen Master definiert, auf den die Lichtquelle und der Detektor triggerbar sind, wobei die Lichtquelle (1), insbesondere bei modengekoppelten Lasern, den Mastertrigger erzeugen kann, auf den der Detektor (11) triggerbar ist oder wobei der Detektor (11), insbesondere aus einer intrinsischen oder von außen angesteuerten Clock, den Trigger erzeugen kann, auf den die Lichtquelle (1) synchronisierbar ist.

7. Mikroskop nach einem der Ansprüche 1 bis 6, **dadurch gekennzeichnet, dass** der Detektor (11) als gatebare Kamera ausgeführt ist, wobei die Kamera (11) einen triggerbaren/gatebaren schnellen optischen Shutter (18) umfassen kann oder dieser der Kamera (11) funktional zugeordnet sein kann.

8. Mikroskop nach Anspruch 7, **dadurch gekennzeichnet, dass** der Shutter (18) als schnelle schaltbarer optischer Bildverstärker ausgeführt ist, der das Licht im eingeschalteten Zustand verstärkt.

9. Mikroskop nach Anspruch 7, **dadurch gekennzeichnet, dass** der Shutter (18) als optischer Absorber ausgeführt ist, der durch kurze Lichtpulse gesättigt und dadurch bei Anliegen des Gatesignals durchsichtig wird.

10. Mikroskop nach einem der Ansprüche 1 bis 9, **dadurch gekennzeichnet, dass** der Detektor (11) als solcher gatebar ausgeführt ist, nämlich entsprechend aktivierbar/deaktivierbar ist.

11. Mikroskop nach einem der Ansprüche 1 bis 10, **dadurch gekennzeichnet, dass** der Ausgang des Detektors (11) während der Aus-Zeit des Gates kurzgeschlossen und/oder gegenüber der Signal-Abführung abgeklemmt/unterbrochen ist.

12. Mikroskop nach einem der Ansprüche 1 bis 11, **dadurch gekennzeichnet, dass** als Detektor (11) Arrays von vorzugsweise im Geiger-Mode betreibbaren Avalanche-Phodioden (APD), umfasst, wobei jedes einzelne Bildpixel des bildgebenden Detektors (11) aus einer einzelnen APD oder aus mehreren APD's im Sinne eines Subarrays besteht.

13. Mikroskop nach einem der Ansprüche 1 bis 11, **dadurch gekennzeichnet, dass** der Detektor (11) nach Erzeugung eines Detektionssignals eine Information zur Verfügung stellt, die den jeweiligen Signalanteil als verwertbar oder nicht verwertbar qualifiziert.

14. Mikroskop nach einem der Ansprüche 1 bis 12, **dadurch gekennzeichnet, dass** jedem Photon oder Bildpixel eine die Ankunftszeit repräsentierende Zeitmarke oder eine Aufzeichnung des zeitlichen Signalverlaufs zugeordnet wird, um in einer nachgeordneten Datenverarbeitungseinheit (13) zu entscheiden, ob das Photon/Bildpixel zur Auswertung verwendbar ist.

15. Verfahren zur bildgebenden Fluoreszenzmikroskopie, insbesondere zur Widefield-Fluoreszenzmikroskopie, mit einem eine gepulste Lichtquelle und einen bildgebenden Detektor umfassenden Mikroskop, insbesondere unter Nutzung eines Mikroskops nach einem der Ansprüche 1 bis 14,
**dadurch gekennzeichnet, dass** in Bezug auf die zur Bildgebung nutzbaren Signale ein Gaten stattfindet, dass nämlich durch das Gaten eine Synchronisation von Lichtquelle und Detektor zum Zwecke einer Reflexions-/Streulichtunterdrückung derart durchgeführt wird, dass geeignete Fluoreszenzanteile für die Auswertung verwertet und ungeeignete Anteile verworfen werden.
